# EUROPÄISCHE PATENTANMELDUNG

(11) **EP 1 939 541 A2**
(43) Veröffentlichungstag der Anmeldung: **02.07.2008**
(21) Anmeldenummer: 07076139.0
(22) Anmeldetag: 31.12.2007
(51) Int. Cl.: F24D 19/10, F24H 8/00

(54) **Verfahren zum Steuern einer Heizungsanlage und Heizungsanlage**

(30) Priorität: 30.12.2006 DE 102006062635; 02.01.2007 DE 102007001337
(71) Anmelder: HG Baunach GmbH & Co KG, 41836 Hückelhoven (DE)
(72) Erfinder: Baunach, Hans Georg, 52074 Aachen (DE)
(74) Vertreter: Heim, Johann-Ludwig

(57) **Zusammenfassung**

Verfahren zum Steuern einer Heizungsanlage (140) mit einer einen von einem Brenner (2) beheizten Wärmetauscher (3) aufweisenden, insbesondere im Brennwertbersich betriebenen Wärmequelle (141), die an eine Vorlauf- und Rücklaufleitung (10 und 11) angeschlossen ist und mit wenigstens einem an die Vorlauf- und Rücklaufleitung (10 und 11) angeschlossenen, eine Wärmesenke (142) bildenden Heizzweig (143),wobei zwischen Wärmequelle (141) und Wärmesenke (142) eine Pumpe (4) angeordnet ist und die Vorlauf- und Rücklaufleitung (10 und 11) mittels eines Bypasses (144) mit einstellbarer Ansprochochwelle verbunden sind, dadurch gekennzeichnet, dass der gesamte Wasserdurcheatz im Rücklauf (11) aus der Wärmesenke (142) von der Pumpe (4) angesaugt wird und der Parallelschaltung von als Überströmventil (9) ausgebildetem Bypass (144) und Wärmetauscher (3) zugeführt und dann am Wärmetauscher vorbeigeführt wird, wenn der Durchsatz aus der Wärmesenke (142) grösser als der durch den Wärmetauscher (3) ist.

## Beschreibung

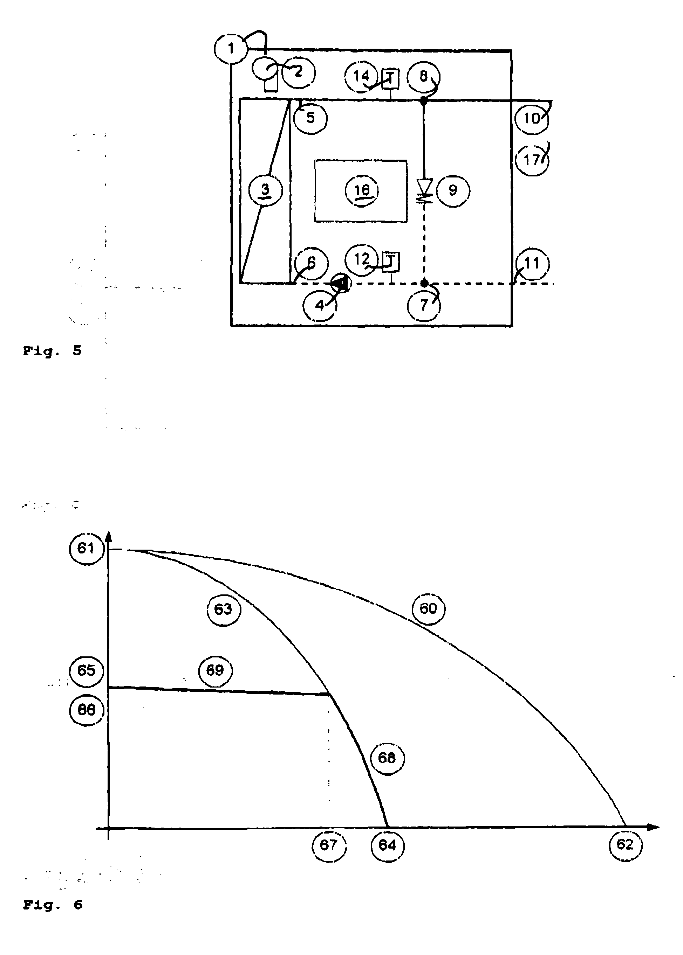

Die vorliegende Erfindung bezieht sich auf ein Verfahren zum Betrieb einer Umlaufmedium-Heizanlage gemäss den einleitenden Teilen der unabhängigen Patentansprüche. Solche Heizanlagen mit einem oder mehreren Keizgeräten und einem oder mehreren Heizzweigen sind marktgängig, wobei die Bauart des oder der Heizgeräte aufgrund das geringen Wasserinhalts einen Mindestdurchfluß im Wärmetauscher erfordern (begrifflich: sog. Heizer im Gegensatz zu Kesseln). Solche Geräte sind insbesondere als Gas-Brannwertgeräte mit hohen räumlichen Leistungsdichten weit verbreitet. Dabei können Brennwertgeräte ihre bauartbedingten Vorteile des Wirkungsgradgewinns durch Kondensation nur dann erzielen, wenn die Rücklauftemperatur am Wärmetauscher des Heizgerätes möglichst niedrig ist. Dies steht jedoch der ebenfalls weit verbreiteten Bauart nach Fig. 5 entgegen, in der ein Differenzdruck-Überströmventil den Mindestdurchfluß durch den Wärmetauscher sichert.

Stand der Technik ist also ein Heizgerät gemäß Fig. 5 mit einem Brenner, dessen Heizgase ihre Wärme in einem Wärmetauscher im Gegenstrom an das Umlaufmedium (meist Wasser) abgeben, welches über den unmittelbaren Rücklauf in den Wärmetauscher einströmt und durch den unmittelbaren Vorlauf auströmt. In einer dieser beiden Leitungen und insbesondere, wie in Fig. 5 dargestellt, meist im unmittelbaren Rücklauf befindet sich eine Umwälzpumpe, die das Heizmedium hydraulisch antreibt. Parallel zu dieser Reihenschaltung aus Wärmetauscher und Pumpe befindet sich ein Bypass zwischen einem Verteilpunkt im Vorlauf und einem Sammelpunkt im Rücklauf, in dem sich das Überatrömventil befindet. Der oder die zu versorgenden, eine Wärmesenke bildenden Heizzweige befinden sich parallel zu diesem Bypass zwischen dem Vorlaufanschluß und dem Rücklaufanschluß des Heizgerätes. Steigt der hydraulische Widerstand der Wärmesenke so stark an, daß der Mindestdurchfluß durch den Wärmetauscher nicht mehr gewährleistet ist, so führt der mit dieser Durchflußminderung verbundene Differenzdruokanstieg dazu, daß das bis dahin geschlossene Überströmventil öffnet und der Mindestvolumenstrom durch den Bypass gewährleistet ist.

In Fig. 6 ist dieser Vorgang im Kennlinienfeld der sogenannten Restförderhöhe den Heizgerätes, also zwischen den Anschlüssen der Vorund Rücklaufleitung, dargestellt. Auf der horizontalen Achse ist der äußere Durchfluß durch die Wärmesenke aufgetragen, auf der vertikalen Achse der zugehörige Differenzdruck bzw. die sogenannte Restförderhöhe. Durchläuft der äußere hydraulische Widerstand alle Werte von unendlich bis null, so ergeben sich die folgenden Kennlinien: Die Kennlinie (60) der Pumpe ist alleine für sich gemessen. Die maximale Förderhöhe (61) stellt sich beim Durchfluß null ein (äußerer hydraulischer Widerstand unendlich), der maximale Durchfluß (62) beim Differenzdurck null (äußerer hydraulischer Widerstand null). Durch die Reihenschaltung von Pumpe (4) und Wärmetauscher (3) bleibt die maximale Förderhöhe (61) unverändert, lediglich der maximale Durchfluß sinkt auf den Wort (64), so dass sich die Kennlinie (63) dieser Reihenschaltung ergibt. Wird dieser Reihenschaltung nun das Überströmventil (9) in der beschriebenen Weise parallelgeschaltet, so bleibt die Kennlinie in dem Bereich (68) erhalten, in dem der äußere Volumenstrom grösser als der Wert gemäss Punkt (67) ist und der Differenzdruck noch unterhalb des Wertes (66) liegt, bei dem das Überströmventil (9) öffnet. Ein weiteres Absinken des äußeren Volumenstromes führt jetzt nicht mehr zu einem Anstieg des Differenzdruckes entlang der Kennli-nie (63), sondern entlang des Teilabschnitts (69) der Kennlinie. Die maximale Restförderhöhe entspricht jetzt noch dem Wert (65). Diesen Verfahren hat zwei wesentliche Nachteile:
1) Das Heizgerät kann bei einem Volumenstrom unterhalb vom Punkt (67) nicht mehr im grösstmöglichen Brennwert-Nutzungsgrad betrieben werden, da hier direkt heisses Umlaufmedium aus dem Vorlauf (5) in den Rücklauf (6) des Wärmetauscher (3) und so die Rücklauftemperatur angehoben wird.
2) Das Heizgerät kann keine größeren Volumenströme bereitstellen als die Werte (64), was häufig zu weiteren externen Pumpeninstallationen in den Heizzweigen führt.

Der Erfindung liegt mithin die Aufgabe zu Grunde, diese beiden Nachteile des Standes der Technik zu beseitigen.

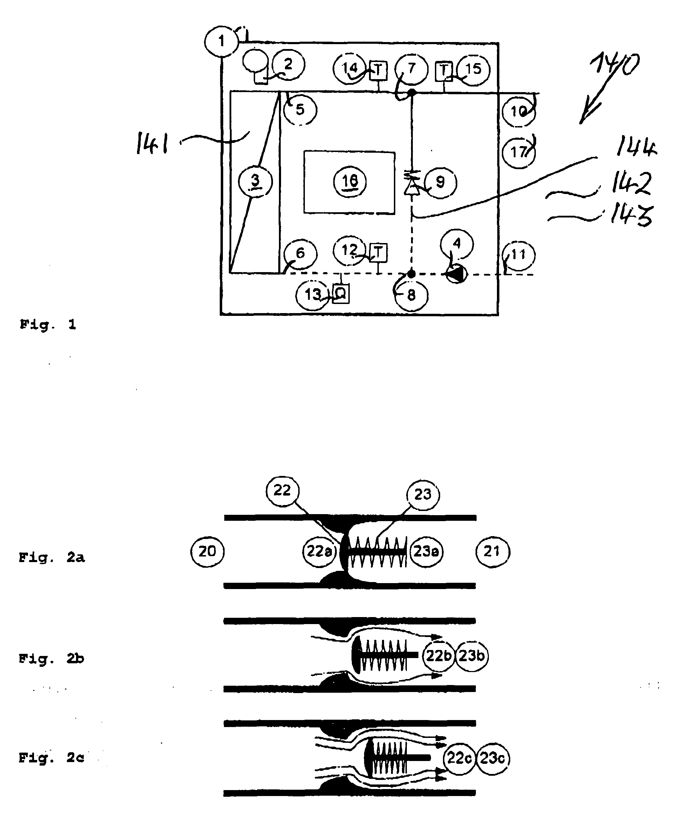

Diese Aufgabe wird alternativ zunächst durch die Schritte der unabhängigen Verfahrenopatentansprüche und unabhängig davon durch die Merkmale der unabhängigen Vorriohtungspatentansprüche gelöst. So ergeben sich Anordnungen alternativ gemäß den Fig. 1 und 8 bis 10:
In dem Heizgerät (1) einer Heizanlage (140) befindet sich ebenfalls ein Brenner (2), dessen Heizgase ihre Wärme in dem Wärmetauscher (3) im Gegenstrom an das Heizmedium (meist Wasser) abgeben, welches über den unmittelbaren Rücklauf (6) in den Wärmetauscher (3) einströmt und durch den unmittelbaren Vorlauf (5) auströmt. Im Gegensatz zum Stand der Technik wird jedoch die Umwälzpumpe (4) nicht in Reihe mit dem Wärmetauscher (3) geschaltet und nicht das Überströmventil (9) parallel zu dieser Reihenschaltung und dem äußeren hydraulischen Widerstand zwischen den Anschlüssen (10) und (11), sondern der Wärmetauscher (3) wird parallel zu dem ein Überströmventil (9) enthaltenden Bypass 144 geschaltet und diese Parallelschaltung in Reihe mit der Pumpe (4) und dem einen äußeren hydraulischen Widerstand bildenden Heizzweig (143) oder Wärmesenke (142) zwischen den Anschlüssen (10) und (11). Dadurch liegt der Sammelpunkt (7) nicht mehr im Rücklauf zwischen dem Anschluss (11) und dem Wärmetauscherrücklauf (6), sondern im Vorlauf zwischen dem Wärmetauschervorlauf (5) und dem Anschluss (10); der Verteilpunkt liegt nicht mehr im Vorlauf zwischen dem Wärmetauschervorlauf (5) und dem Anschluss (10), sondern im Rücklauf zwischen dem Anschlunss (11) und dem Wärmetauscherrücklauf (6). Somit kann kein brennwertschädliches Überströmen von heissem Vorlaufmedium über den Bypass in den Rücklauf (6) des Wärmetauschers (3) mehr erfolgen. Damit ist die erste dieser Erfindung zugrunde liegende Aufgabe gelöst.

Bevor die Auswirkungen dieser Änderung im Kennlinienfeld dargestellt werden, soll die Wirkungsweise des Überströmventils in den Fig. 2a bis Fig. 2c genauer betrachtet werden:
- Fig. 2a: zeigt das geschlossene Überströmventil mit seiner Eintrittsöffnung (20), seiner Austrittsöffnung (21), seinem beweglichen Stellkörper in geschlossener Stellung (22a) und das mechanische Federelement (23a) in geschlossener Stellung.
- Fig. 2b: zeigt das nicht vollständig geöffnete Überströmventil mit seinem beweglichen Stellkörper im Regelbetrieb (22b) und das mechanische Federelement (23b) im Regelbetrieb.
- Fig. 2c: zeigt das vollständig geöffnete Überströmventil mit seinem beweglichen Stellkörper in Endstellung (22c) und das mechanische Federelement (23c) in Endstellung.

Es gibt also drei Betriebszustände: a) geschlossen, b) regelnd und c) vollständig geöffnet.

Fig. 3 zeigt das zugehörige Druckverlust-Kennlinienfeld: Auf der horizontalen Achse (31) ist der Durchfluss in die Eintrittsöffnung (20) und aus der Austrittsöffnung (21) aufgetragen, auf der vertikalen Achse (30) der dabei zwischen Eintrittsöffnung (20) und Austrittsöffnung (21) des Überströmventiles auftretende Differenzdruck (Druckverlust) .
a) Bei null Differenzdruck ist auch der Durchfluns null. Steigt der Differenzdruck von null stetig an, so bleibt der Durchfluss null, bis der Differenzdruck (32) der Ansprechschwelle erreicht wird, bei dem die mechanische Vorspannung des Federelementes (23) aufgehoben wird. Dies entspricht dem oben genannten ersten Betriebszustand: a) geschlossen.
b) Ein weiterer Differenzdruckanstieg führt zu einer raschen Durchflusszunahme entlang des Kennlinienabschnitts (33). In diesem Regelbereich reagiert das mechanische Federelement (23) in Verbindung mit dem Stellkörper (22) auf jede Differenzdruckänderung mit einer Querechnittsänderung bzw. einer hydraulischen Widerstandsänderung. Die Wirkungsrichtung dieser Reaktion ist negativ, bezogen auf die Ursache, da ein steigender Durchfluss einen steigenden Querschnitt und damit einen sinkenden Widerstand und einen sinkenden Druckverlust zur Folge hat und umgekehrt. Aufgrund dieser negativen Rückwirkung auf die Ursache liegt ein geschlossener Regelkreis vor. Dies stellt den oben genannten zweiten Betriebszustand: b) regelnd dar.
c) Überschreitet der Durchfluns den Wert (33) bzw. der Differenzdruck den Wert (34), so befinden sich der Stellkörper (22) und das mechanische Federelement (23) in ihren Endstellungen (22c) und (23c). Eine weitere Zunahme des Durchfusses bzw. des Differenzdrucks führt nun nicht mehr zu einer Querschnitts- und Widerstandsanpassung, sondern durch den konstanten hydraulischen Widerstand auf eine parabolische Druckverlustkennlinie (36), eine sog. starre Rohrnetz-Kennlinie. Dies entspricht dem oben genannten dritten Betriebszustand: c) vollständig geöffnet.

Um die Regelwirkung des Überströmventils möglichst stark auszubilden, also den Druckanstieg vom Wert (32) auf den Wert (34) entlang des Kennlinienabschnitts (33) möglichst gering und den Druchfluss (35) möglichst gross zu gestalten, muss die mechanische Kraftzunahme auf dem Weg des Stellkörpers (22) von der geschlossenen Stellung (22a) zur vollständig geöffneten Stellung (22c) möglichst gering sein; gleiches gilt für die Längenänderung des mechanischen Federelementes (23) von Wert (23a) zum Wert (23c). Dies bedingt ein möglichst weiches mechanisches Federelement mit einer möglichst niedrigen Federkonstanten. Um die für den erwünschten Öffnungs-Differenzdruck (32) notwendige Vorspannung aufzubauen, muss das Federelement entsprechend lang ausgebildet und vorgespannt sein. Dieses Maximierungsprinzip stösst durch die Forderung der sogenannten Knickfestigkeit bzw. Knicksteifigkeit an seine Grenze: Wird das mechanische Federelement zu weich und zu lang, so knickt es ein und verliert seine mechanische Federwirkung. Es ist also optimal, in Bezug auf die Regelcharakteristik des Überströmventils, das mechanische Federelement an der Grenze der Knicksteifigkeit möglichst weich auszulegen und im geschlossenen Zustand möglichst stark vorzuspannen.

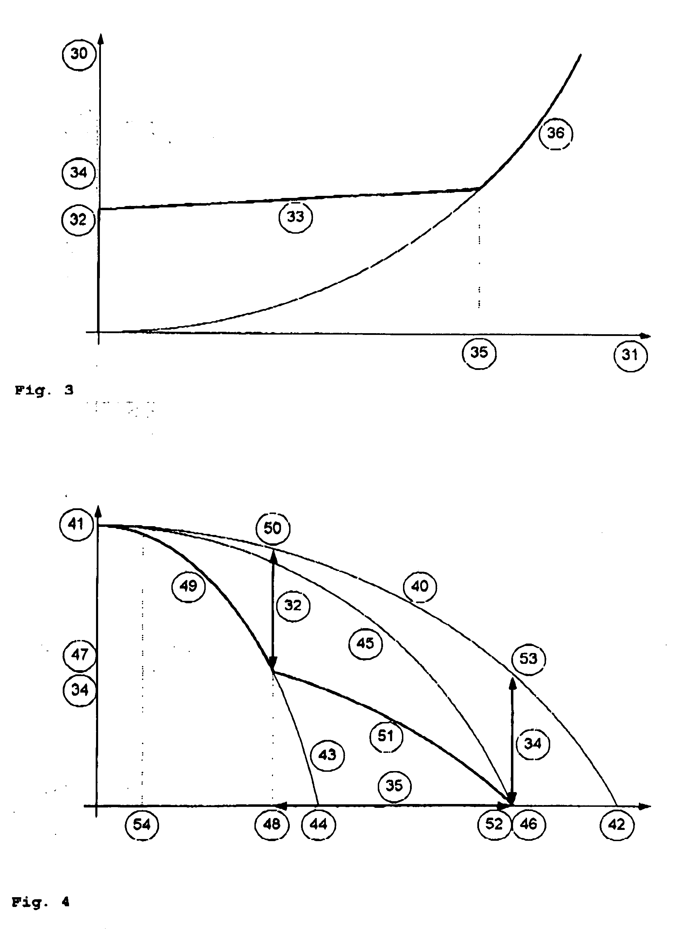

Wird ein solches Überströmventil in ein Heizgerät (1) gemäss Fig. 1 eingebaut, so ergibt sich ein Restförderhöhen-Kennlinienfeld gemäss Fig. 4: Die Kurve (40) zeigt die Restförderhöhen-Kennlinie der Pumpe (4) für sich genommen mit ihrer maximalen Restförderhöhe (41) und ihrem maximalen Durchfluss (42). Wird die Pumpe (4) mit dem Wärmetauscher (3) in Reihe geschaltet, so bleibt die maximale Restförderhöhe (41) unverändert, der maximale Durchfluss sinkt jedoch aufgrund der hydraulischen Widerstandszunahme entlang der Kennlinie (43) auf den Wert (44). Lässt man wiederum einen äusseren hydraulischen Widerstand zwischen dem Vorlauf (10) und dem Rücklauf (11) von unendlich stetig sinken, so steigt der Durchfluss von null an entlang den Teilabschnittes (49) der Kennlinie (43), bis der Durchfluss (48) bzw. die Restförderhöhe (47) erreicht wird. Der Differenzdruck (32) am Beginn des Regelbereiches des Überströmventiles (9) entspricht dabei der Differenz der Restförderhöhe der Pumpenkennlinie (40) und der Kennlinie der Reihenschaltung von Pumpe und Wärmetauscher (43). Ein weiterer Anstieg des Durchflusses führt gegenüber der Pumpenkennlinie (50) nur noch zu einem linearen Anstieg des Druckabfalls entlang der Teil-Kennlinie des Regelbereiches des Überströmventiles (33). Somit verläuft die Restförderhöhen-Teilkennlinie des Heizgerätes bei regelndem Überströmventil (51) mit von einem vom Wart (32) linear zunehmendem Abstand unterhalb der Kennlinie der Restförderhöhe der Pumpe (40), Die optimale Auslegung des hydraulischen Widerstandes des vollständig geöffneten Überströmventils erhält man, wenn dieses seinen Regelbereich bei der Restförderhöhe null gerade vollständig ausgeschöpft hat. Bei dieser Auslegung setzt sich der lineare Anstieg des Druckabfalls über der Parallelschaltung von Wärmetauscher und Überströmventil vom Wert (32) auf den Wert (34) gegenüber der Restförderhöhenkennlinie der Pumpe (40) fort bei einer Zunahme des Durchflusses vom Wert (48) um den Betrag (35) auf den Wert (52), wenn man die Zunahme den Durchflusses durch den Wärmetauscher aufgrund des Differenzdruckanstieges vom Wert (32) auf den Wert (34) vernachlässigt. Diese Vernachlässigung ist umso zulässiger, je flacher die Druckverlust-Kennlinie des Regelbereiches des Überströmventils (33) ausgebildet ist, was mit der zuvor beschriebenen Eigenschaft des mechanischen Federelementes leicht erzielt wird. Folglich fällt bei optimaler Auslegung des Überströmventils der maximale Durchfluss der Reihenschaltung von Pumpe und der Parallelschaltung von Wärmetauscher und voll geöffnetem Überströmventil (46) mit dem Durchfluss (52) am Ende der Rentförderhöhen-Teilkennlinie des Heizgerätes bei regelndem Überströmventil (51) am Ende des Regelbereiches des Überströmventils zusammen. Vergleicht man das Restförderhöhendiagramm des Heizgerätes nach dem Stand der Technik (Fig. 6) mit dem des erfindungsgemässen Heizgerätes (Fig. 4), so erkennt man die deutliche Zunahme des äusseren Durchflussbereiches: Während in Fig. 6 der Durchfluss des Heizgerätes nur bis zum maximalen Durchfluss der Reihenschaltung von pumpe und Wärmetauscher (64) reicht, überschreitet dieser Bereich beim erfindungsgemässen Heizgerät den entsprechenden Wert (44) deutlich um nahezu den Volumenstrom des Durchflusses am Ende des Regelbereiches des Überströmventiles (35) und kommt, realistisch betrachtet, auf etwa den doppelten Wert. Damit ist auch die zweite dieser Erfindung zugrunde liegende Aufgabe gelöst.

Anschliessend soll der Mindestdurchfluss (54) des Wärmetauschers (3) betrachtet werden. Er wird beim erfindungsgemäßen Heizgerät durch einen Volumenstromfühler (13) im unmittelbaren Rücklauf (6) oder im unmittelbaren Vorlauf (5) des Wärmetauschers (3) gemessen. Wird er unterschritten, so muss die Leistungszufuhr am Brenner (2) durch Schliessen eines Magnetventiles in der Gaszuleitung abgestellt werden. Die am Wärmetauscher (3) übertragene Wärmeleistung P [kW] entspricht dem Produkt aus Durchsatz Q [m³/h] und Temperaturdifferenz (sog. Spreizung) DT [K]. Somit ist das DT ein Maß für den leistungsspezifischen Durchfluß des Wärmetauschern und eine nahezu universelle Größe für alle Wärmetauscher des gesamten Leistungsspektrums. Der Erfolg der Heizgeräte im Gegensatz zu Kesseln liegt vor allem in ihrer kompakten Bauart und ihrer hohen Leistungeintensität begründet. Das bedeutet, dass die pro Flächeneinheit, Masseneinheit oder Heiz-Medium-Volumeninhalt des Wärmetauschers übertragene Leistungsdichte [W/cm² bzw. W/g bzw. W/cm³] vergleichsweise hoch ist. Um die Wärme medienseitig (in der Regel wasserseitig) abführen zu können, muss die Durchströmung turbulent und nicht laminar sein, weil nur dadurch die Strömungsgeschwindigkeiten unmittelbar an den Oberflächen des Wärmetauschers (3) deutlich über null gehalten werden können. Dies allerdings bedingt einen relativ hohen Druckverlust bzw. einen relativ hohen hydraulischen Widerstand im Wärmetauscher (3). Um also den erforderlichen Mindestdurchfluss (54) im Wärmetauscher (3) möglichst klein gestalten zu können, muss man einen höheren hydraulischen Widerstand in Kauf nehmen.

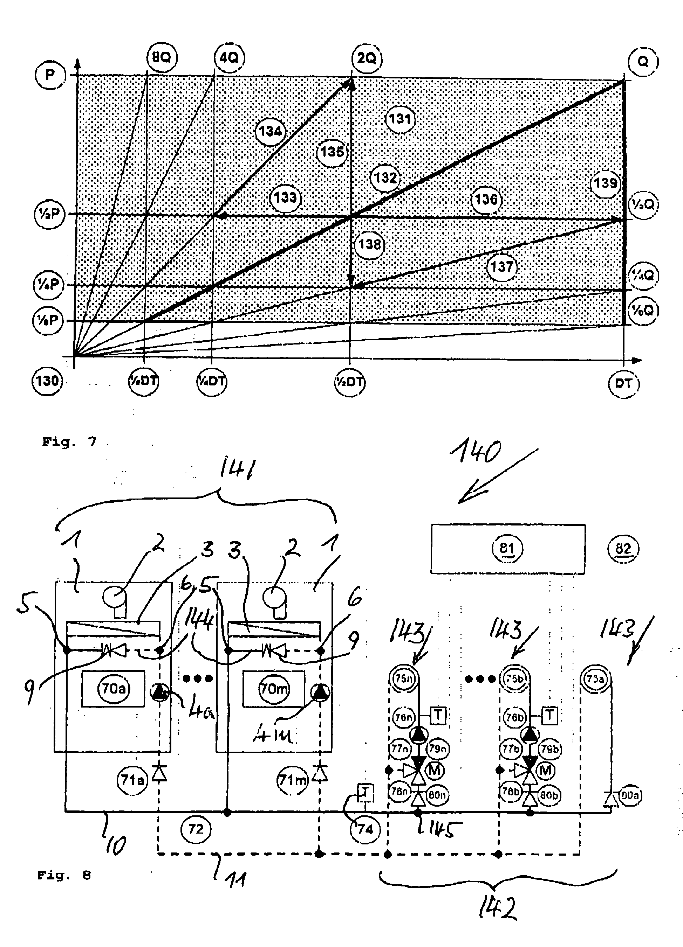

Fig. 7 zeigt ein Kennlinienfeld, bei dem auf der horizontalen Achse die Spreizung DT und auf der vertikalen Achse die Leistung P aufgetragen ist. Der Leistungsbereich (131) des modulierenden Brenners ist schraffiert und reicht beispielhaft von der Nennleistung (P) bis zur kleinsten Leistung (½P). Da der Durchfluss Q der Quotient von P/DT-ist, ergeben sich die Betriebszustände mit konstantem Durchfluß als Strahlen durch den Ursprung (130). Es empfiehlt sich, den Wärmetauscher (3) so auszulegen, dass die maximale Leistung (P) bei der maximalen Spreizung (DT) übertragen worden kann. Der sich daraus ergebende Durchfluss Q (132) ist als Grundlage für die Dimensionierung des Wärmetauschers und seines hydraulischen Widerstandes bestens geeignet. Dabei sollte die maximale Spreizung (DT) möglichst gross gewählt werden, um das Heizgerät auch zur gravitationnschichtenden Beladung von Pufferspeichern geeignet zu machen. Ein geeigneter Wert für die maximale Spreizung (DT) könnte beispielsweise 50K sein. Es lassen sich jetzt zwei vorteilhafte Regelstrategien definieren:
1) konstanter Differenzdruck zum Betrieb durchflussgeregelter Heizkreise und
2) maximale Spreizung zur Beladung ungeregelter Speichersysteme

### Zu 1)

Sehr viele Heizkreise besitzen im Wärmeverteilungenetz verteilte Regler, die den Durchfluss einzelner Heizflächen thermostatisch steuern (sog. Thermostatventile und Einzelraumregler). Für diese Systeme sind schon lange differenzdruckgeragelte Umwälzpumpen verfügbar und auch energiepolitisch gefordert. Ein weiterer Nachteil der Heizgeräte nach dem Stand der Technik ist, daas sich diese differenzdruckgeregelten Umwälzpumpen nicht sinnvoll in das bisherige Konzept des Überströmventiles (9) parallel zum Verbraucher integrieren lassen, da auch das Überströmventil (9) ein differenzdruckregelnden verhalten besitzt und es damit zum Reglerkonflikt kommt: Liegt der Sollwert einer solchen differenzdruokgeregelten Umwälzpumpe über dem Differenzdruck der Restförderhöhen-Teilkennlinie des Heizgerätes bei regelndem Überströmventil (69), so wird die Pumpe bei dem versuch, diesen Wert zu erreichen, mit Vollast ein permanentes Überströmen den heissen Vorlaufs vom Verteilpunkt (8) zum Sammelpunkt (7) und damit eine große Energieverschwendung bewirken. Liegt jedoch der Sollwert einer solchen differenzdruckgeregelten Umwälzpumpe unter dem Differenzdruck der Restförderhöhen-Teilkennlinie des Heizgerätes bei regelndem Überströmventil (69), so wird die Leistung der Pumpe gedrosselt, bevor das Überströmventil (9) öffnet, was die Mindestumlaufsicherung des Prinzips ausser Kraft setzt. Im Gegensatz dazu liegt beim erfindungsgemässen Heizer kein differenzdruckkonstantragelndes Verhalten des Überströmventils (9) zwischen den Anschlüssen der Heizlast (10) und (11) vor, sondern es wird der Druckabfall über dem Wärmetauscher (3) begrenzt auf die Warte (32) bis (34). Das bedeutet, dass trotz eines - wie gezeigt - bauartbedingt vorteilhaft hohen Druckabfalls am Wärmetauscher (3) der Druckabfall an der Pumpe (4) gegenüber dem Druckabfall an der Heizlast zwischen den Anschlüssen (10) und (11) begrenzt ist. Dadurch kann die Pumpe über weite Durchflussbereiche die Differenzdruckverhältnisse an der Heizlast mit ihren internen Fühlern konstant regeln, was einen bedeutenden Vorteil für die Regelbarkeit und den elektrischen Arbeitsaufwand darstellt. Fig. 7 zeigt genau, wie der Wirkungsmechanismus der Leistungsanpassung solcher durchflussgeregelter Lasten funktioniert. Ausgehend von einem Zustand mit Nenndurchfluss (Q) bei halber Leistung (½P) und halber maximaler Spreizung (½DT) stellt sich zunächst aufgrund einen äusseren Einflusses auf einen hydraulischen Einzelregler im Verteilernetz eine Durchflussverdoppelung (133) ein. Dadurch halbiert sich bei konstanter Leistung zunächst die Spreizung auf (½DT). Daraufhin verdoppelt die Vorlauftemperaturregelung (16) die Leistungszufuhr des Brenners (2) bei konstantem Durchfluss (134) auf die volle Leistung (P), was zu einer resultierenden Leistungsverdoppelung bei konstanter Spreizung (135) führt. Umgekehrt wirkt eine Durchflusshalbierung (136) zunächst spreizungsverdoppelnd, bevor die Vorlauftemperaturtagelung bei konstantem Durchfluss längs der Leistungshalbierung (137) die Leistung auf (½P) halbiert, was im Resultat einer Leistungshalbierung bei konstanter Spreizung (138) entspricht. Man sieht hierbei deutlich, wie wichtig gerade für Heizgeräte mit modulierenden Brennern die Fähigkeit ist, nicht nur die Brennerleistung, sondern auch den zugehörigen Durchfluss anpassen zu können.

### Zu 2)

Zur Beladung durchflunaungeregelter Puffer- und Trinkwasserspeicher empfiehlt sich hingegen, die maximale Spreizung (DT) konstant zu regeln. Hierzu muse nur die Leistungszufuhr des Brenners (2) an die Leistungszufuhr (3) der Umwälzpumpe (3) angepasst werden. Will man verhindern, daß es zu einem Öffnen des Überströmventils (9) kommt, so genügt es, die beiden Temperaturen (14) und (15) zu vergleichen: solange beide Temperaturen gleich sind, ist das Überströmventil (9) geschlossen. Erst durch öffnen den Überströmventils (9) fällt die Temperatur (15) gegenüber der Temperatur (14) zurück. Mit der bekannten Rücklauftemperatur (12) und dem Durchfluss (13) lässt sich auch leicht und ohne zusätzliche Messung der äußere Durchfluss von (10) nach (11) berechnen: Q₍₁₀₎ = Q₍₁₁₎ = Q₍₁₃₎ • (T₍₁₄₎-T₍₁₃₎) / (T₍₁₅₎-T₍₁₃₎) . Der Zentralrechner (16) verfügt somit über alle Informationen, um die beschriebenen Betriebsarten steuern und überwachen zu können sowie über einen weiteren Eingang (17) für externe Sollwertvorgaben. Dies kann beispielsweise sein: Die Aussentemperatur, die Raumtemperatur, ein konstanter Sollwert für die Brennerleistung, ein konstanter Sollwert für die Vorlauftemperatur, ein konstanter Sollwert für die Pumpenleistung oder ähnliches.

Fig. 8 beschreibt eine sogenannte Kaskade, bestehend aus 1a bis 1m erfindungsgemässen Heizern (70a) bis (70m), die jeweils über einen Rückflussverhinderer (71a) bis (71m) mit je einer Sammel- bzw. Verteilerleitung (72) verbunden sind und mindestens einen ungeregelten Heizkreis (75a) sowie optional n-1 weitere mischergeregelte Heizkreise (75b) bis (75n) ebenfalls jeweils über einen Rückflussverhinderer (80a) bis (80n) versorgen. Der zentrale Vorlauftemperaturfüh-1er (74) befindet sich zur Reduzierung der Totzeit möglichst nahe an der Kaskade. Die optionalen mischergeregelten Heizkreise (75b) bis (75n) verfügen jeweils über einen Vorlauftemperaturfühler (76b) bis (76n), eine Umwälzpumpe (77b) bis (77n), einen Mischer (78b) bis (78n) und einen dazugehörigen Stellmotor (79b) bis (79n). Diese Komponenten sind mit dem Zentralrechner (16) der Kaskade (81) verbunden, der darüber hinaus einen eigenen Eingang (82) für externe Sollwertvorgaben besitzt. Dies kann beispielsweise sein: Die Aussentemperatur, die Raumtemperatur, ein konstanter Sollwert für die Brennerleistung, ein konstanter Sollwert für die Vorlauftemperatur, ein konstanter Sollwert für die Pumpenleistung oder ähnliches. Ebenfalls wirkt der Zentralrechner (16) der Kaskade (81) auf die einzelnen Heizgeräte (70a) bis (70m) über deren Eingang (17) für externe Sollwertvorgaben. Solche Kaskaden sind bereits bekannt und verbreitet, allerdings nicht in der hier dargestellten Weise und ohne den Einsatz einer hydraulischen Weiche. Diese hat nicht nur ebenfalls die bereits beschriebene negative Wirkung der Rücklauftemperaturerhöhung durch Überströmen von heissem Vorlauf in den Geräterücklauf; sie erfordert auch den Einbau einer weiteren Umwälzpumpe im ungeregelten Heizkreis (75a). Die Betriebsweise der Kaskade entspricht ansonsten der üblichen strategie, die aktuelle Heizlast auf eine möglichst grosse Anzahl von Heizgeräten zu verteilen und nichtbenutzte Heizgeräte einschliesslich Umwälzpumpe (4) auszuschalten. Selbstverständlich gelten die oben beschriebenen vorteilhaften Betriebsweisen des konstanten Differenzdrucks zum Betrieb durchflussgeregelter Heizkreise und der maximalen Spreizung zur Beladung ungeregelter Speichersysteme in gleicher Weise, wobei die erstere in der Praxis der Kaskaden von grösserer Bedeutung sein dürfte.

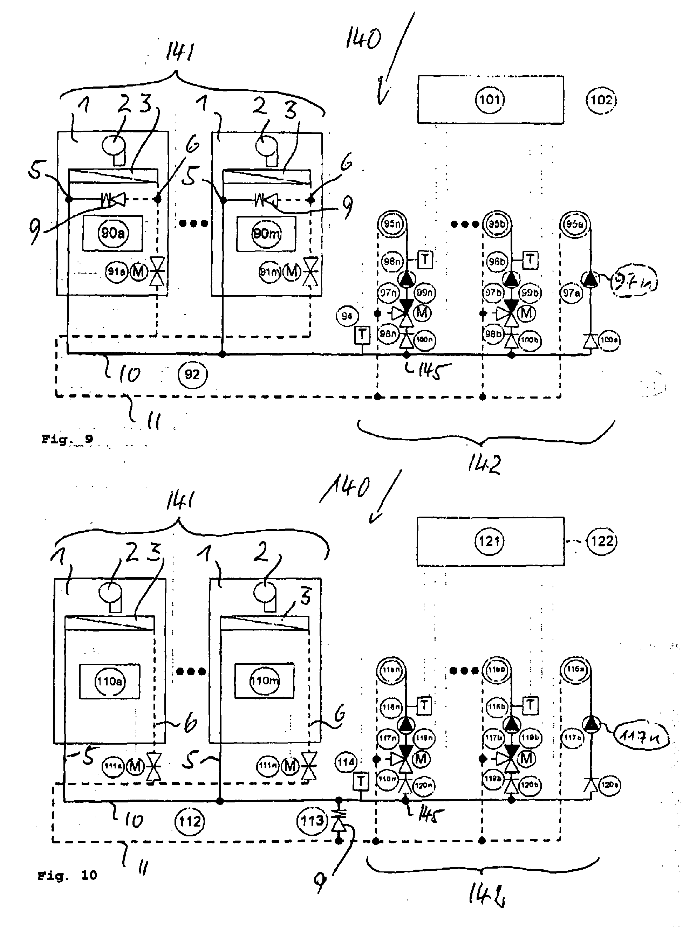

Fig. 9 zeigt eine weitere Ausbildungsform der vorgenannten Kaskade, bei der in erfindungegemässen Heizern die Umwälzpumpe (4) durch ein Motorventil ersetzt wurde. Sie besteht aus einem bis m derartig modifizierten Heizern (90a) bis (90m), die jeweils über ein Motorventil (91a) bis (91m) mit je einer idealerweise nach Tichelmann weglängenoptimierten Sammel- bzw. Verteilerleitung (92) verbunden sind und n Heizkreise (95a) bis (95n) jeweils über einen Rückflussverhinderer (100a) bis (100n) versorgen, von denen optional einer (95a) ungeregelt und die anderen n-1 (75b) bis (75n) mischergeregelt sind; es können aber auch alle n Heizkreise mischergeregelt sein. Der zentrale Vorlauftemperaturfühler (94) befindet sich zur Reduzierung der Totzeit möglichst nahe an der Kaskade. Die mischergeregelten Heizkreise (95b) bis (95n) verfügen jeweils über einen Vorlauffühler (96b) bis (96n), einen Mischer (98b) bis (98n) und einen dazugehörigen Stellmotor (99b) bis (99n). Alle Heizkreise (95a) bis (95n) besitzen eine Umwälzpumpe (97a) bis (97n). Alle genannten Komponenten sind mit dem Zentralrechner (101) der Kaskade verbunden, der darüber hinaus einen eigenen Eingang (102) für externe Sollwortvorgaben besitzt. Diese können beispielsweise sein: Die Aussentemperatur, die Raumtemperatur, ein konstanter Sollwert für die Brennerleistung, ein konstanter Sollwert für die vorlauftemperatur, ein konstanter Sollwert für die Pumpenleistung oder ähnlichen. Ebenfalls wirkt der Zentralrechner der Kaskade (101) auf die einzelnen Heizgeräte (90a) bis (90m) über deren Eingang (17) für externe Sollwertvorgaben. Gegenüber der vorgenannten Kaskade hat diese Bauform den Vorteil, dass anstatt n+m-1 Pumpen nur n Pumpen benötigt werden. Um eine möglichst gute Gleichverteilung des Gesamtdurchflusses auf die einzelnen Heizer (90a) bis (90m) der Kaskade zu erreichen, kann es erforderlich sein, den hydraulischen Widerstand der Motorventile (91a) bis (91m) grösser auszubilden als den hydraulischen Widerstand der Überströmventile (9) in den Heizern. Die Betriebsweise der Kaskade entspricht ansonsten der üblichen Strategie, die aktuelle Heizlast auf eine möglichst grosse Anzahl von Heizgeräten zu verteilen. Nichtbenutzte Heizgeräte werden dabei durch die Motorventile vom Durchflss abgetrennt.

Fig. 10. zeigt eine weitere Ausbildungsform der vorgenannten Kaskaden, bei der Heizer ohne eingebaute Umwälzpumpe (4) zum Einsatz kommen. Solche Geräte sind bereits bekannt und verbreitet, allerdings sind sie noch nicht in Kaskaden ohne hydraulische Weiche und ohne eine externe Umwälzpumpe je Heizgerät betrieben worden. Sie besteht aus einem bis m derartigen Heizern (110a) bis (110m), die jeweils über einen Motorventil (112a) bis (111m) mit je einer idealerweise nach Tichelmann weglängenoptimierten Sammel- bzw. Verteilerleitung (112) verbunden sind und n Heizkreise (115a) bis (115n) jeweils über einen Rückflussverhinderer (120a) bis (120n) versorgen, von denen optional einer (115a) ungeregelt und die anderen n-1 (115b) bis (115n) mischergeregelt sind, wobei zwischen den Heizgeräten (110a) bis (110m) und den Heizkreisen (115a) bis (115n) ein zentrales Überströmventil (113) in einem Bypass zwischen dem Vorlauf und dem Rücklauf der Sammel- und Verteilerleitung (112) eingebaut ist; wie zuvor beschrieben, können aber auch alle n Heizkreise mischergeregelt sein. Für die Dimensionierung des zentralen Überströmventiles (113) ergeben sich die gleichen Regeln analog zur beschriebenen Bauform des eingebauten Überströmventiles (9). Nur muss für den maximalen Durchfluss am Ende des Regelbereiches des Überströmventiles (35) jetzt der maximale Gasamtdurchfluss der Kaskade eingesetzt werden. Sinvoll ist auch der Einsatz eines marktüblichen Überströmventiles mit einstellbarem Öffnungsdruck (32). Dadurch lässt sich die Heizanlage (140) an einer zentralen Stelle nachjustieren. Der zentrale Vorlauftemperaturfühler (114) befindet unmittelbar hinter dem Bypass mit dem Überströmventil (113) und zur Reduzierung der Totzeit möglichst nahe an der Kaskade. Die mischergeregelten Heizkreise (115b) bis (115n) verfügen jeweils über einen Vorlauffühler (116b) bis (116n), einen Mischer (118b) bis (118n) und einen dazugehörigen Stellmotor (119b) bis (119n). Alle Heizkreise (115a) bis (115n) besitzen eine Umwälzpumpe (117a) bis (117n). Alle genannten Komponenten sind mit dem Zentralrechner (121) der Kaskade verbunden, der darüber hinaus einen eigenen Eingang (122) für externe Sollwertvorgaben besitzt. Diese können beispielsweise sein: Die Aussentemperatur, die Raumtemperatur, ein konstanter Sollwert für die Brennerleistung, ein konstanter Sollwert für die Vorlauftemperatur, ein konstanter Sollwert für die Pumpenleistung oder ähnliches. Ebenfalls wirkt der zentralrechner (121) der Kaskade auf die einzelnen Heizgeräte (110a) bis (110m) über deren Eingang (17) für externe sollwertvorgaben. Gegenüber der vorgenannten Kaskade hat diese Bauform den Vorteil, dass nur ein zentrales Überströmventil (113) benötigt wird und sich die Gleichverteilung des Durchflusses auf die einzelnen Heizgeräte (110a) bis (110m) wegen des relativ hohen hydraulischen Widerstandes der Wärmetauscher (3) leicht von selbst einstellen wird. Die Betriebeweise der Kaskade entspricht ansonsten der üblichen Strategie, die aktuelle Heizlast auf eine möglichst grosse Anzahl von Heizgeräten zu verteilen. Nichtbenutzte Heizgeräte werden dabei durch die Motorventile vom Durchfluß abgetrennt.

### Legende

- Fig. 1:: Schema des erfindungsgemäßen Heizers
- Fig. 5:: Schema des Heizers nach dem Stand der Technik
- 1: Heizgerät
- 2: Brenner des Heizgerätes
- 3: Wärmetauscher
- 4: Umwälzpumpe
- 5: unmittelbarer Vorlaufanschluß den Wärmetauschers
- 6: unmittelbarer Rücklaufanschluß das Wärmetauschers
- 7: Sammelpunkt Bypass/Heizkreis
- 8: Verteilpunkt Bypass/Heizkreis
- 9: Bypass mit Differenzdruck-Überströmventil
- 10: Vorlauf des Heizgerätes = mittelbarer Vorlauf den Wärmetauschers
- 11: Rücklauf des Heizgerätes = mittelbarer Rücklauf des Wärmetauschers
- 12: Temperaturfühler im unmittelbaren Rücklauf des Wärmetauschers
- 13: Volumenstromfühler im unmittelbaren Rücklauf des Wärmetauschers
- 14: Temperaturfühler im unmittelbaren Vorlauf des Wärmetauschers
- 15: Temperaturfühler im Vorlauf des Heizgerätes
- 16: Zentrale Steuereinheit
- 17: externe Sollwertvorgabe

- Fig. 2:: Betriebszustände des Überströmventils
- 20: Eintrittsöffnung des Überströmventils
- 21: Austrittsöffnung des Überströmventils
- 22: Beweglicher Stellkörper des Überströmventils
- 22a: Beweglicher Stellkörper des geschlossenen Überströmventils
- 22b: Beweglicher Stellkörper des regelnden Überströmventils
- 22c: Beweglicher Stellkörper des voll geöffneten Überströmventils
- 23: Mechanisches Federelement des Überströmventils
- 23a: Mechanisches Federelement des geschlossenen Überströmventils
- 23b: Mechanisches Federelement den regelnden Überströmventils
- 23c: Mechanisches Federelement des voll geöffneten Überströmventils

- Fig. 3:: Druckverlust-Kennlinienfeld des Überströmventils
- Fig. 4:: Restförderhöhen-Kennlinienfeld den erfindungsgemäßen Heizers
- 30: Druckverlustachse
- 31: Durchflußachse.
- 32: Differenzdruck am Beginn des Regelbesreiches des Überströmventils
- 33: Druckverlust-Kennlinie des Regelbereiches des Überströmventils
- 34: Differenzdruck am Ende des Regelbereiches des Überströmventils
- 35: Durchfluß am Ende des Regelbereiches des Überströmventils
- 36: Druckverlunt-Kenlinie des voll geöffneten Überströmventils

- Fig. 4:: Restförderhöhen-Kennlinienfeld des erfindungsgemäßen Heizers
- 40: Restförderhöhen-Kennlinie der Pumpe über dem Durchfluß
- 41: maximale Förderhöhe der Pumpe
- 42: maximaler Durchfluß der Pumpe
- 43: Restförderhöhen-Kennlinie der Reihenschaltung von Pumpe und Wärmetauscher über dem Durchfluß
- 44: maximaler Durchfluß der Reihenschaltung von Pumpe und Wärmetauscher
- 45: Restförderhöhen-Kennlinie der Reihenschaltung von Pumpe und der Parallelschaltung von Wärmetauscher und voll geöffnetem Überströmventil über dem Durchfluß
- 46: maximaler Durchfluß der Reihenschaltung von Pumpe und der Parallelschaltung von Wärmetauscher und voll geöffnetem Überströmventil
- 47: Restförderhöhe am Beginn des Regelbereiches des Überströmventils
- 48: Durchfluß am Beginn des Regelbereiches des Überströmventils
- 49: Restförderhöhen-Teilkonnlinie des Heizgerätes bei geschlossenem Überströmventil
- 50: Restförderhöhe der Pumpe am Beginn des Regelbereiches des Überströmventils
- 51: Restförderhöhen-Teilkennlinie des Heizgerätes bei regelndem Überströmventil
- 52: Durchfluß am Ende das Regelbereiches des Überströmventils
- 53: Restförderhöhe der Pumpe am Ende des Regelbereiches des, Überströmventils
- 54: Mindestdurchfluß des Wärmetauschers bzw. das Heizgerätes

- Fig. 6:: Restförderhöhen-Kennlinienfeld des Heizers Stand der Technik
- 60: Restförderhöhen-Konnlinie der Pumpe über dem Durchfluß
- 61: maximale Förderhöhe der Pumpe
- 62: maximaler Durchfluß der Pumpe
- 63: Restförderhöhen-Konnlinie der Reihenschaltung von Pumpe und Wärmetauscher über dem Durchfluß
- 64: maximaler Durchfluß der Reihenschaltung von Pumpe und Wärmetauscher
- 65: Restförderhöhe am Beginn des Regelbereiches des Überströmventils
- 66: Restförderhöhe am Ende des Regelbereiches des Überströmventils
- 67: Durchfluß am Ende des Regelbereiches des Überströmventils
- 68: Rastförderhöhen-Teilkannlinie des Heizgerätes bei geschlossenem Überströmventil
- 69: Restförderhöhen-Teilkennlinie des Heizgerätes bei regelndem Überströmventil

- Fig. 8: Kaskade aus erfindungsgemäßen Heizern
- 70a..m: ein bis m Heizgeräte des beschriebenen Typs mit eingebauter Umwälzpumpe in Parallelkaskade
- 71a..m: Rückflußverhinderer je Heizgerät
- 72: Sammler/Verteiler in Parallelschaltung
- 74: Temperaturfühler im Gesamt-Vorlauf der Kaskade
- 75a..n: ein bis n Heizkreise , davon ...
- 75a: ... ein Heizkreis ungeregelt (ohne Mischer) und ohne Pumpe
- 75b..n: ... optional bis zu n-1 weitere gemischt geregelte Heizkreise mit Pumpe
- 76b..n: Temperaturfühler im Vorlauf des gemischt geregelten Heizkreises
- 77b..n: Pumpe im Vorlauf des gemischt geregelten Heizkreises
- 78b..n: Mischer im Vorlauf des gemischt geregelten Heizkreises
- 79b..n: Stellantrieb des Mischers im Vorlauf des gemischt geregelten Heizkreises
- 80a..n: Rückflußverhinderer je Heizkreis
- 81: Zentrale Steuerung der Kaskade
- 82: externe Sollwertvorgabe der Kaskade

- Fig. 9: Kaskade aus erfindungs gemäßen modifizierten Heizern
- 90a..m: ein bis m Heizgeräte des beschriebenen Typs mit ausgebauter Umwälzpumpe in Parallelkaskade
- 91a..m: Motorventil je Heizgerät
- 92: Sammler/Verteiler in Parallelschaltung mit Längenausgleich nach Tichelmann
- 94: Temperaturfühler im Gesamt-Vorlauf der Kaskade
- 95a..n: ein bis n Heizkreise, davon ...
- 95a: ... ein Heizkreis ungeregelt (ohne Mischer) mit Pumpe
- 95b..n: .... optional bis zu n-1 weitere gemischt geregelte Heizkreise mit Pumpe
- 96b..n: Temperaturfühler im vorlauf des gemischt geregelten Heizkreises
- 97a..n: Pumpe im Vorlauf des Heizkreises
- 98b..n: Mischer im Vorlauf des gemischt geregelten Heizkreises
- 99b..n: Stellantrieb des Mischers im Vorlauf des gemischt geregelten Heizkreises
- 100a..n: Rückflußverhinderer je Heizkreis
- 101: Zentrale Steuerung der Kaskade
- 102: externe Sollwertvorgabe der Kaskade

- Fig. 10: Erfindungsgemaße Kaskade aus Heizern Stand der Technik
- 110a..m: ein bis m Heizgeräte des beschriebenen Typs mit eingebauter Umwälzpumpe in Parallelkaskade
- 111a..m: Rückflußverhinderer je Heizgerät
- 112: Sammler/Verteiler in Parallelschaltung
- 113: Gesamt-Bypass der Kaskade mit Überströmventil
- 114: Temperaturfühler im Gesamt-Vorlauf der Kaskade
- 115a..n: ein bis n Heizkreise, davon ...
- 115a: ... ein Heizkreis ungeregelt (ohne Mischer) mit Pumpe
- 115b..n: ... optional bis zu n-1 weitere gemischt geregelte Heizkreise mit Pumpe
- 116b..n: Temperaturfühler im Vorlauf des gemischt geregelten Heizkreises
- 117b..n: Pumpe im Vorlauf des gemischt geregelten Heizkreises
- 118b..n: mischer im Vorlauf des gemischt geregelten Heizkreises
- 119b..n: stellantrieb des Mischers im Vorlauf des gemischt geregelten Heizkreises
- 120a..n: Rückflußverhinderer je Heizkreis
- 121: Zentrale Steuerung der Kaskade
- 122: externe Sollwertvorgabe der Kaskade

- Fig. 7: Leistungs-Spreizungs-Konnlinionfald
- 130: Ursprung
- 131: Betriebsbereich des Heizgerätes
- 132: Kennlinie der Leistungsanpassung durchflußgeregelter Heizkreise
- 133: Durchflußvordoppolung durch gesteigerte Leistungsanforderung
- 134: Leistungsvordoppolung der Vorlauftemperaturregelung bei konstantem Durchfluß
- 135: resultierende Leistungaverdoppelung bei konstantem DT
- 136: Durchflußhalbierung durch verminderte Leistungsanforderung
- 137: Leistungshalbierung der Vorlauftemperaturregelung bei konstantem Durchfluß
- 138: resultierende Leistungshalbierung bei konstantem DT
- 139: Kennlinie bei Leistungsanpassung maximale Spreizung
- P: volle Geräte-Leistung
- ½P: halbe Geräte-Leistung
- ½P: viertel Geräte-Leistung
- ½P: achtel Geräte-Leistung
- DT: maximale Spreizung
- ½DT: halbe maximale Spreizung
- ½DT: viertel maximale Spreizung
- ½DT: achtel maximale Spreizung
- 8Q: achtfacher Nenndurchfluß des Wärmetauschers
- 4Q: vierfacher Nenndurchfluß des Wärmetauschers
- 2Q: dopplter Nenndurchfluß des Wärmetauschers
- Q: Nenndurchfluß des Wärmetauschers
- ½Q: halber Nenndurchfluß des Wärmetauschers
- ½Q: viertel Nenndurchfluß des Wärmetauschers
- ½Q: achtel Nenndurchfluß des Wärmetauschers
- 140: Heizanlage
- 141: Wärmequelle
- 142: Wärmesenke
- 143: Heizweig
- 144: Bypass
- 145: Anschluss erster Heizzweig

## Patentansprüche

1. Verfahren zum Steuern einer Heizungsanlage (140) mit einer einen von einem Brenner (2) beheizten Wärmetauscher (3) aufweisenden, insbesondere im Brennwertbereich betriebenen Wärmequelle (141), die an eine Vorlauf- und Rücklaufleitung (10 und 11) angeschlossen ist und mit wenigstens einem an die Vorlauf- und Rücklaufleitung (10 und 11) angeschlossenen, eine Wärmesenke (142) bildenden Heizzweig (143),wobei zwischen Wärmequelle (141) und wärmesenke (142) eine Pumpe (4) angeordnet ist und die Vorlauf- und Rücklaufleitung (10 und 11) mittels eines Bypasses (144) mit einstellbarer Ansprechschwelle verbunden sind, **dadurch gekennzeichnet, dass** der gesamte Wasserdurchsatz vorzugsweise im Rücklauf (11) aus der Wärmesenke (142) von der Pumpe (4) angesaugt wird und der Parallelschaltung von als Überströmventil (9) ausgebildetem Bypass (144) und Wärmetauscher (3) zugeführt und dann am Wärmetauscher vorbeigeführt wird, wenn der Durchsatz aus der Wärmesenke (142) grösser als der durch den Wärmetauscher (3) ist. (Fig. 1)

2. Verfahren zum Steuern einer Heizungsanlage (140) mit zwei oder mehr je einen von einem Brenner (2) beheizten Wärmetauscher (3) aufweisenden, insbesondere im Brennwertbereich betriebenen Wärmequellen (141), die an je eine Vorlauf- und Rücklaufnammelleitung (10 und 11) angeschlossen sind und mit wenigstens einem an die Vorlauf- und Rücklaufleitung (10 und 11) angeschlossenen, eine Wärmesenke (142) bildenden Heizzweig (143), wobei in der Vorlauf- oder Rücklaufleitung (5 und 6) jeder Wärmequelle (141) eine Pumpe (4) angeordnet ist, **dadurch gekennzeichnet, dass** der gesamte Wasserdurchsatz im Rücklauf (11) aus der Wärmesenke von den Pumpen (4a...m) angesaugt wird und der Parallelschaltung von als Überströmventil (9) ausgebildetem Bypass (144) und Wärmetauscher (3) jeder Wärmequelle (141) zugeführt und dann am jeweiligen Wärmetauscher (3) vorbeigeführt wird, wenn der Durchsatz aus der Wärmesenke (142) grösser als der durch die Gesamtheit der Wärmetauscher (3) ist. ( Fig. 8)

3. Vorfahren zum Steuern einer Heizungsanlage (140) mit zwei oder mehr je einen von einem Brenner (2) beheizten Wärmetauscher (3) aufweisenden, insbesondere im Brennwertbereich betriebenen Wärmequellen (141), .die an je eine Vorlauf- und Rücklaufsammelleitung (10 und 11) angeschlossen sind und mit wenigstens einem an die Vorlauf- und Rüoklaufsammelleitung (10 und 11) angeschlossenen, eine Wärmesenke (142) bildenden Heizzweig (143), wobei Wärmequelle (141) und Wärmesenke (142) mit einer Pumpe (4) verbunden sind und die Vorlauf- und Rücklaufsammelleitung (10 und 11) mittels eines Bypasses (144) mit einstellbarer Ansprechschwelle verbunden sind, **dadurch gekennzeichnet, dass** der gesamte Wasserdurchsatz der Wärmesenke (142) von der (n) in der Wärmesenke (142) angeordneten Pumpe(n) (97a ... n) angesaugt wird und den Parallelschaltungen von als Überströmventil (9) ausgebildetem Bypass (144) und Wärmetauscher (3) jeder Wärmequelle (141) zugeführt und dann am jeweiligen Wärmetauscher (3) vorbeigeführt wird, wenn der Durchsatz aus der Wärmesenke (142) grösser als der durch die Gesamtheit der Wärmetauscher (3) ist. (Fig. 9)

4. Verfahren zum Steuern einer Heizungsanlage (140) mit zwei oder mehr je einen von einem Brenner (2) beheizten Wärmetauscher (3) aufweisenden, insbesondere im Brennwertbereich betriebenen Wärmequellen (141), die an je eine Vorlauf- und Rücklaufsammelleitung (10 und 11) angeschlossen sind und mit wenigstens einem an die Vorlauf- und Rücklaufsammelleitung (10 und 11) angeschlossenen, eine Wärmesenke (142) bildenden Heizzweig (143), wobei Wärmequelle (141) und Wärmesenke (142) mit einer Pumpe (4) verbunden sind und die Vorlauf- und Rücklaufsammelleitung (10 und 11) mittels eines Bypasses (144) mit einstellbarer Ansprechschwelle verbunden sind, **dadurch gekennzeichnet, dass** der gesamte Wasserdurchsatz der Wärmesenke (142) von der (n) in der Wärmesenke (142) angeordneten Pumpe(n) (117a...n) angesaugt wird und der Parallelschaltung von als Überströmventil (9) ausgebildetem Bypass (144) und den Wärmetauschern (3) jeder Wärmequelle (141) zugeführt und dann an den Wärmetauschern (3) vorbeigeführt wird, wenn der Durchsatz aus der Wärmesenke (142) grösser als der durch die Gesamtheit der Wärmetauscher (3) ist. (Fig. 10)

5. Verfahren zum Steuern einer Heizungsanlage (140) mit einer einen von einem Brenner (2) beheizten Wärmetauscher (3) aufweisenden, insbesondere im Brennwertbereich betriebenen Wärmequelle (141), die an eine Vorlauf- und Rücklaufleitung (10 und 11) angeschlossen ist und mit wenigstens einem an die Vorlauf- und Rücklaufleitung (10 und 11) angeschlossenen, eine Wärmesenke (142) bildenden Heizzweig (143),wobei zwischen Wärmequelle (141) und Wärmesenke (142) eine Pumpe (4) angeordnet ist und die Vorlauf- und Rücklaufleitung (10 und 11) mittels eines Bypasses (144) mit einstellbarer Ansprechschwelle verbunden sind, **dadurch gekennzeichnet, dass** der gesamte vorzugsweise im Rücklauf (11) aus der Wärmesenke (142) von der Pumpe (4) angesaugte Wasserdurchsatz der Parallelschaltung von als Überströmventil (9) ausgebildetem Bypass (144) und Wärmetauscher (3) zugeführt und der durch den Wärmetauscher (3) fliessende Teil erfasst und einem Regler (16) zusammen mit den Temperaturwerten unmittelbar stromab des Wärmetauschers (3) sowie unmittelbar stromab der Einmündungsstelle (7) des Bypasses (144) in die Vorlaufleitung (10) zugeführt werden, dessen Stellgrösse die Leistung des Brenners (2) und/oder der Pumpe (4) ist. (Fig.1)

6. Verfahren zum Steuern einer Heizungsanlage (140) mit einer einen von einem Brenner (2) beheizten Wärmetauscher (3) aufweisenden, insbesondere im Brennwertbereich betriebenen Wärmequelle (141), die an eine Vorlauf- und Rücklaufleitung (10 und 11) angeschlossen ist und mit wenigstens einem an die Vorlauf- und Rücklaufleitung (10 und 11) angeschlossenen, eine Wärmesenke (142) bildenden Heizzweig (143),wobei zwischen Wärmequelle (141) und Wärmesenke (142) eine Pumpe (4) angeordnet ist und die Vorlauf- und Rücklaufleitung (10 und 11) mittels eines Bypasses (144) mit einstellbarer Ansprechschwelle verbunden sind,- **dadurch gekennzeichnet**, dann sowohl die Temperatur der Vorlaufleitung (10) und die der Rücklaufleitung (11) gemessen werden und einem Regler (16) zugeführt werden, dessen Stellgrössen die Leistung des Brenners (2) und der Pumpe (4) sind, wobei sich Änderungen der Vorlauftemperatur auf die Brennerleistung und Änderungen der Rücklauftemperatur auf die Pumpenleistung auswirken.

7. Verfahren zum Steuern einer Heizungsanlage (140) nach Anspruch 6, **dadurch gekennzeichnet, dass** die Brennerleistung Stellgrösse einer Vorlauftemperaturregelung und die Pumpenleistung Stellgrösse eines Differanzkonstantdruckraglern ist.

8. Verfahren zum Steuern einer Heizungsanlage (140) nach Anspruch 6, **dadurch gekennzeichnet, dass** die Brennerleistung Stellgrösse einer Vorlauftemperaturragelung und die Pumpenleistung Stellgrösse eines Differanztemperaturreglers ist.

9. Heizungsanlage (140) mit einer einen von einem Brenner (2) beheizten Wärmetauscher (3) auf weisenden, insbesondere im Brennwertbereich betriebenen Wärmequelle (141), die an eine Vorlauf- und Rücklaufsammelleitung (10 und 11) angeschlossen ist und mit wenigstens einem an die Vorlauf- und Rücklaufsammelleitung (10 und 11) angeschlossenen, eine Wärmesenke (142) bildenden Heizzweig (143), wobei zwischen Wärmequelle (141) und Wärmesenke (142) eine Pumpe (4) angeordnet ist und die Vorlauf- und Rücklaufsammelleitung (10 und 11) mittels eines Bypasses (144) mit einstellbarer Ansprechschwelle verbunden sind, **dadurch gekennzeichnet, dass** die Pumpe (4) vorzugsweise im Rücklauf (11) aus der Wärmesenke (142) angeordnet ist und der Parallelschaltung von als Überströmventil (9) ausgebildetem Bypass (144) und Wärmstauscher (3) vorgeschaltet ist. (Fig. 1)

10. Heizungsanlage (140) mit zwei oder mehr je einen von einem Brenner (2) beheizten Wärmetauscher (3) aufweisenden, insbesondere im Brennwertbereich betriebenen Wärmequellen (141), die an je eine Vorlauf- und RÜcklaufsammolleitung (10 und 11) angeschlossen sind und mit wenigstens einem an die Vorlauf- und Rücklaufsammelleitung (10 und 11) angeschlossenen, eine Wärmesenke (142) bildenden Heizzweig (142), wobei in der Vorlauf- oder Rücklaufsammelleitung (10 und 11) jeder Wärmequelle (141) eine Pumpe (4) angeordnet ist und die vorlauf- und Rüoklaufsammelleitung (10 und 11) mittels eines Bypasses (144) mit einstellbarer Ansprechschwelle verbunden sind, **dadurch gekennzeichnet, dass** die Pumpen (4) jeweils im Rücklauf (6) aus der Wärmesenke (142) angeordnet und der Parallelschaltung von als Überströmventil (9) ausgebildeten Bypass (144) und Wärmetauscher (3) jeder Wärmequelle (141) vorgeschaltet sind. (Fig. 8)

11. Heizungsanlage (140) mit zwei oder mehr je einen von einem Brenner (2) beheizten Wärmetauscher (3) aufweisenden, insbesondere im Brennwertbereich betriebenen Wärmequellen (141), die an je eine Vorlaut-und Rücklaufsammelleitung (10 und 11) angeschlossen sind und mit wenigstens einem an die Vorlauf- und Rücklaufsammelleitung (10 und 11) angeschlossenen, eine Wärmesenke (142) bildenden Heizzweig (143), wobei Wärmequelle (141) und Wärmesenke (142) mit einer Pumpe (4) verbunden sind und die Vorlauf- und Rücklaufsammelleitung (10 und 11) mittels eines Bypasses (144) mit einstellbarer Ansprechschwelle-verbunden sind, **dadurch gekennzeichnet, dass** der gesamte Wasserdurchsatz der Wärmesenke (142) von der(n) in der Wärmesenke (142) angeordneten Pumpe(n) (97a...n/117a..-n) erfasst ist und der Parallelschaltung von als Überströmventil (9) ausgebildeten Bypass (144) und Wärmetauscher (3) jeder Wärmequelle 141) zugeführt ist. (Fig. 9 und 10)

12. Heizungsanlage (140) mit einer einen von einem Brenner (2) beheizten Wärmetauscher (3) aufweisenden, insbesondere im Brennwertbereich betriebenen Wärmequelle (141), die an eine Vorlauf- und Rücklaufleitung (10 und 11) angeschlossen ist und mit wenigstens einem an die Vorlauf- und Rücklaufleitung (10 und 11) angeschlossenen, eine Wärmesenke (142) bildenden Heizzweig (143), wobei zwischen Wärmequelle (141) und Wärmesenke (142) eine Pumpe (4) angeordnet ist und die Vorlauf- und Rücklaufleitung (10 und 11) mittels eines Bypasses (144) mit einstellbarer Ansprechschwelle verbunden sind, **dadurch gekennzeichnet, dass** die Pumpe (4) im Rücklauf (11) aus der Wärmesenke (142) angeordnet ist, dass die Pumpe (4) stromauf der Parallelschaltung von als Überströmventil (9) ausgebildetem Bypass (144) und Wärmetauscher (3) vorgesehen ist, dass ferner ein Durchsatzfühler (13) für den durch den Wärmetauscher (3) fliessenden Teil vorgesehen und einem Regler (16) zusammen mit Temperaturwerte unmittelbar stromab des Wärmetauschers (3) sowie unmittelbar stromab der Einmündungsstelle (7) des Bypasses (144) in die Vorlaufleitung (10) messenden Temperaturfühlern (14, 15) zugeführt werden, wobei die Stellgrösse des Reglers (16) die Leistung des Brenners (2) ist. (Fig. 1)

13. Heizungsanlage (140) nach einem der Ansprüche 7 bis 10, **dadurch gekennzeichnet**, dann den Heizgeräten (1) je ein Absperrventil **(91a...n)** vor- oder nachgeschaltet ist.

14. Heizungsanlage (140) nach einem der Ansprüche 7 bis 10, **dadurch gekennzeichnet, dass** den Heizgeräten (1) ein Rückschlagventil (71a...n) als Schwerkraftbremse mit kleinem Durchflusswiderstand zusätzlich vor- oder nachgeschaltet ist.

15. Heizungsanlage (140) nach einem der Ansprüche 7 bis 10, **dadurch gekennzeichnet, dass** der minimale Durchflusswiderstand des Überströmventiles (9) gleich oder kleiner gehalten ist als der Durchflusswiderstand aller Heizgeräte (1) der Wärmequelle samt ihren vor- oder nachgeschalteten Armaturen.

16. **Heizungsanlage** (140) nach einem der Ansprüche 7 bis 10, **dadurch gekennzeichnet, dass** in der Vorlaufsammelleitung (3) stromab der Einmündung (7) des Überströmventiles (9) und stromauf des Anschlusses (145) des ersten Heizzweiges (143) ein Temperaturfühler (15) vorgesehen ist.

17. Heimungsanlage (140) nach einem der Ansprüche 7 bis 10, **dadurch gekennzeichnet, dass** das Überströmventil ( 9) voreingestellt ist.
